## Europäisches Patentamt
## European Patent Office
## Office européen des brevets

(19)

(11) Numéro de publication: **0 226 769**
**B1**

(12) **FASCICULE DE BREVET EUROPEEN**

(45) Date de publication du fascicule du brevet: 23.05.90

(51) Int. Cl.⁵: **A 23 J 3/00**

(21) Numéro de dépôt: **86115309.6**

(22) Date de dépôt: **05.11.86**

(54) Procédé de fabrication d'un condiment.

(30) Priorité: **25.11.85 CH 5013/85**

(43) Date de publication de la demande:
**01.07.87 Bulletin 87/27**

(45) Mention de la délivrance du brevet:
**23.05.90 Bulletin 90/21**

(84) Etats contractants désignés:
**AT BE DE ES FR GR IT LU NL SE**

(56) Documents cités:
**AU-A- 441 069**
**DE-B-1 057 435**

**SEIFEN-ÖLE-FETTE-WACHSE, vol. 105, no. 18, 8 novembre 1979, pages 531-533, Augsburg, DE; H. STAGE: "Heutiger Entwicklungsstand der Anlagen zur physikalischen Raffination pflanzlicher Öle"**

(73) Titulaire: **SOCIETE DES PRODUITS NESTLE S.A.**
**Case postale 353**
**CH-1800 Vevey (CH)**

(72) Inventeur: **Faesi, Roland**
**Säntisstrasse 1A**
**CH-8311 Bruetten (CH)**
Inventeur: **Werner, Giancarlo**
**Rosenbühlstrasse 31**
**CH-8044 Zurich (CH)**
Inventeur: **Wolfensberger, Ursula**
**Zelglistrasse 11**
**CH-8320 Fehraltorf (CH)**

(56) Documents cités:
**CHEMICAL ABSTRACTS, vol. 95, 1981, page 585, résumé no. 40937d, Columbus, Ohio, US; D. DANIELS et al.: "Use of closed-system vacuum distillation for isolation of moderately volatile compounds"**

Courier Press, Leamington Spa, England.

**Description**

La présente invention a pour objet un procédé de fabrication d'un condiment, dans lequel on hydrolyse des protéines végétales à l'acide chlorhydrique concentré, on neutralise l'hydrolysat, on en sépare des premiers insolubles, on le laisse reposer et on en sépare des seconds insolubles, ainsi qu'un appareil de distillation à la vapeur pour la mise en oeuvre du procédé.

Des études récentes ont montré que les condiments liquides non décolorés préparés par hydrolyse de protéines végétales à l'acide chlorhydrique concentré contiennent une quantité non négligeable de chlorohydrines dont le plus souvent une proportion dominante de dichloro-1-3-propane-2-ol. Le problème de leur élimination est posé. On peut songer à différents procédés pour éliminer ces composants.

On a constaté en particulier que les pâtes obtenues en concentrant ces condiments par évaporation ou les versions décolorées au charbon actif de ces condiments présentent des concentrations en chlorohydrines nettement inférieures. Cependant, la concentration par évaporation implique une consommation d'énergie considérable. De même, la décoloration au charbon actif dans des filtres presses par exemple requiert non seulement la mise en oeuvre d'importants moyens quant aux opérations et à l'installation nécessaires mais encore modifie considérablement les qualités organoleptiques du condiment qui perd son goût caractéristique tout en conservant son pouvoir renforçateur d'arôme.

Une autre possibilité consiste à soumettre à ladite hydrolyse une matière première qui necontienne aucune matière grasse, la glycérine étant précisément le précurseur permettant la formation de chlorohydrines avec l'acide chlorhydrique. Or, d'une part de telles matières premières sont pratiquement introuvables dans le commerce et d'autre part les qualités organoleptiques dudit condiment s'en trouveraient sensiblement modifiées.

On peut songer également à réaliser l'hydrolyse à l'aide d'un acide minéral sans chlore tel que l'acide sulfurique ou l'acide phosphorique. Mais une telle modification du procédé traditionnel a également des conséquences défavorables sur les qualités organoleptiques du condiment obtenu.

Une autre possibilité encore consiste à séparer par rectification une fraction de l'hydrolysat contenant les chlorohydrines. Un tel procédé nécessite cependant au moins deux étapes de séparation, si l'on veut conserver en particulier dans le produit final des composants qui jouent un rôle important sur le plan organoleptique mais sont plus volatiles que les chlorohydrines.

La présente invention a pour but de proposer un procédé de fabrication dudit condiment qui permette d'en éliminer les chlorohydrines et tout particulièrement le dichloro-1-3-propane-2-ol d'une manière simple et efficace sans modifier ni la densité, ni la composition en acides aminés, ni les qualités organoleptiques de ce condiment.

A cet effet, le procédé selon la présente invention est caractérisé par le fait que, après la séparation desdits premiers ou desdits seconds insolubles, on soumet l'hydrolysat à une distillation à la vapeur sous pression réduite tout en maintenant la densité de l'hydrolysat à une valeur sensiblement constante, de façon à en éliminer le dichloro-1-3-propane-2-ol.

Dans le cadre de la présente invention, on propose également un appareil de distillation à la vapeur pour la mise en oeuvre du présent procédé, comprenant une colonne de distillation (1) composée d'une tête (4), d'un corps cylindrique (2) garni d'éléments de contact (3), et d'un culot (5), un dispositif de pompage de gaz (8, 9) branché sur ladite tête, une conduite d'introduction (7) d'hydrolysat branchée sur ladite colonne entre ledit corps et ladite tête, une conduite d'injection (6) de vapeur branchée sur ladite colonne entre ledit culot et ledit corps, et une conduite d'évacuation (10) de l'hydrolysat branchée sur ledit culot, caractérisé par le fait que

(i) ladite tête (4) présente un diamètre sensiblement plus grand que le diamètre dudit corps (2), et qu'elle est reliée au dit corps (2) par un col tronconique (17), un anneau de détente cylindrique (18) présentant au moins un orifice d'écoulement (19) étant disposé concentriquement contre la paroi intérieure dudit col, ladite conduite (7) d'introduction de l'hydrolysat débouchant dans un espace annulaire (20) délimité par ledit col tronconique (17) et ledit anneau de détente (18), et un répartiteur (21) d'hydrolysat étant disposé au-dessous dudit anneau de détente,

(ii) il comprend en outre un dispositif de réglage (11) de la température de l'hydrolysat branché sur la conduite d'introduction (7), et relié électriquement par l'intermédiaire d'un circuit électronique de commande (15) de température, à une cellule de mesure (16) de la densité de l'hydrolysat branchée sur la conduite (10) d'évacuation.

On a constaté en effet avec surprise qu'il est ainsi possible d'éliminer en une seule étape, à situer après la séparation desdits premiers ou desdits seconds insolubles, la quasi totalité du dichloro-1-3-propane-2-ol de l'hydrolysat, que cette élimination peut se faire ainsi en maintenant la densité de l'hydrolysat à une valeur pratiquement constante et que la composition en acides aminés et les qualités organoleptiques du condiment liquide ainsi obtenu restent pratiquement inchangées par rapport à celles du condiment obtenu par le procédé traditionnel.

Dans la suite du présent exposé, on utilise l'abréviation DCP pour désigner le dichloro-1-3-propane-2-ol. Comme on l'a dit plus haut, un condiment fabriqué par hydrolyse de protéines végétales à l'aide de l'acide chlorhydrique concentré peut contenir d'autres chlorohydrines que le DCP, notamment le chloro-3-propane-1,2-diol et le dichloro-2-3-propane-1-ol. Cependant, d'une part la concentration de ces chlorohydrines dans ce condiment est généralement inférieure à celle du DCP, et d'autre part on a constaté que ces autres chlorohydrines sont également pratiquement éli-

2

minées en même temps que le DCP lors de la mise en oeuvre du présent procédé. C'est ainsi que l'on peut se limiter à déterminer la teneur du condiment en DCP pour déterminer valablement si la teneur de ce condiment en chlorohydrines dépasse ou non une certaine limite.

De même, dans le présent exposé, on utilise le terme "éliminer" dans des expressions telles que "éliminer le DCP du condiment" pour signifier que l'on enlève la majeure partie de la substance en question pour n'en laisser qu'une partie insignifiante. Il faut noter à ce propos que la méthode d'analyse retenue pour déterminer la teneur en DCP du condiment, autrement dit la concentration du DCP dans le condiment, joue un rôle déterminant quant à la reproductibilité du résultat. C'est ainsi qu'une méthode particulièrement fiable permettant de déterminer avec sûreté des concentrations même inférieures au dixième de ppm a été développée dans le cadre de la présente invention. Le détail de cette méthode est présenté plus loin, juste avant les exemples.

Pour mettre en oeuvre le présent procédé, on peut utiliser comme matière première des sources de protéines végétales d'origines variées. On peut utiliser par exemple des tourteaux de graines d'oléagineuses, du gluten de céréales ou de la farine de soja dégraissée.

Pour l'hydrolyse, on utilise donc de l'acide chlorhydrique concentré. On peut utiliser par exemple un acide chlorhydrique 4N—8N, de préférence 6N, qui présente donc une concentration de environ 15—25%, de préférence 20% en poids. On peut réaliser l'hydrolyse dans des cuves émaillées en brassant lentement la matière première dans l'acide à une température de 70—120°C durant plusieurs heures, par exemple 6—13h. On obtient généralement à ce premier stade un hydrolysat de couleur sombre contenant une forte proportion de substances insolubles dites humiques appelées les premiers insolubles dans le présent exposé. On peut neutraliser l'hydrolysat avec une base concentrée, de préférence du carbonate de sodium sous forme sèche ou pâteuse, jusqu'à un pH de environ 5,0—6,0. On peut filtrer ensuite l'hydrolysat neutralisé de manière à en éliminer lesdits premiers insolubles. On peut soumettre l'hydrolysat à ladite distillation à la vapeur à ce deuxième stade ou après l'avoir laissé reposer. On peut laisser reposer l'hydrolysat plus ou moins longtemps, de quelques jours à quelques semaines par exemple selon l'usage auquel on le destine, de manière à permettre la séparation de substances cristallisant lentement et de particules colloïdales s'agglomérant lentement appelées les seconds insolubles dans le présent exposé. On peut séparer lesdits seconds insolubles par filtration. On peut enfin soumettre l'hydrolysat à ladite distillation à la vapeur à ce troisième stade si on ne l'a pas fait après la séparation desdits premiers insolubles. On obtient un hydrolysat liquide de couleur sombre dont la qualité est considérée comme d'autant meilleure que sa densité est grande. C'est ainsi que l'on réalise de préférence les étapes ci-dessus du procédé de manière à obtenir une densité de l'hydrolysat comprise entre 1,250 et 1,265 g/cm³.

On soumet donc l'hydrolysat, après la séparation desdits premiers ou desdits seconds insolubles, à une distillation à la vapeur sous pression réduite tout en maintenant la densité de l'hydrolysat à une valeur sensiblement constante, de façon à en éliminer le DCP. Il s'est en effet révélé important de réaliser toute l'opération de la distillation à la vapeur dans des conditions de température modérée qui conservent intactes les qualités organoleptiques de l'hydrolysat et dans des conditions opératives qui n'autorisent pratiquement aucune dilution de l'hydrolysat et assurent par là une efficacité maximale du processus d'élimination du DCP.

On réalise de préférence cette distillation à la vapeur à une température de 45 à 70°C sous une pression de 100—320 mbar, en mettant en contact un courant ascendant de 10—20 parties en poids/ h de vapeur avec un courant descendant de 100 parties en poids/h d'hydrolysat le long d'une zone de contact de 5—15 m de hauteur garnie d'éléments de contact. On a constaté en effet qu'il est préférable de ne pas laisser la température de distillation dépasser 70°C, si l'on ne veut pas provoquer en particulier une modification des qualités organoleptiques de l'hydrolysat. On travaille de préférence à des températures situées dans le haut du domaine indiqué, de manière à ne pas augmenter inutilement la dépense d'énergie nécessaire pour réduire la pression dans la colonne d'une part et pour condenser la vapeur chargée de DCP d'autre part.

La pression indiquée de 100—320 mbar correspond pratiquement à la pression de vapeur de l'eau à 45—70°C. On travaille donc de préférence dans des conditions telles que l'hydrolysat et la vapeur de distillation soient pratiquement en équilibre thermique sur toute la hauteur de ladite zone de contact, l'hydrolysat ne présentant pratiquement pas d'élévation du point d'ébullition par rapport à l'eau.

Les quantités respectives d'hydrolysat et de vapeur mises en contact dépendent en particulier de la teneur résiduelle en DCP de l'hydrolysat que l'on veut obtenir, de la hauteur de la zone de contact et de la surface de contact à disposition dans ladite zone. Le rapport des quantités d'hydrolysat et de vapeur et la hauteur de la zone de contact indiquées ci-dessus permettent de réduire la concentration du DCp dans le condiment d'un facteur de environ 10—100. Elles permettent en d'autres termes de réduire une concentration en DCP de l'hydrolysat de par exemple 1—10 ppm à moins de 0,2—0,5 ppm. Pour un facteur de réduction désiré, il est ainsi possible de n'utiliser que la quantité de vapeur minimum nécessaire et donc de ne dépenser qu'un minimum d'énergie. Les valeurs absolues des quantités de vapeur et d'hydrolysat mises en contact par h, autrement dit les débits peuvent être choisis de manière à assurer un taux de transfert de DCP proche de l'optimum dans un domaine relativement large limité vers le haut par les risques d'entraînement de quantités non négligeables d'hydrolysat par un courant trop violent de vapeur.

En ce qui concerne la surface de contact à disposition dans ladite zone, elle est de préférence aussi grande que possible et conçue de manière adéquate pour éviter la formation de chemins préférentiels pour la vapeur tout en assurant un écoulement aisé de l'hydrolysat. A cet effet, la zone de contact est donc garnie d'éléments de contact. Quoique des éléments de contact à disposer en vrac tels que des hélices ou des tronçons de tubes conviennent également, on utilise de préférence des éléments de contact disposés dans un ordre déterminé tels que par exemple des feuilles de métal ondulées percées de trous et appliquées les unes contre les autres en croisant l'orientation des plis. De tels éléments de contact permettent d'obtenir une surface de contact par unité de volume de la zone de contact aussi grande que 250 m²/m³ par exemple. Ils permettent également de limiter à quelques dizaines de mbar la différence de pression inévitable entre le dessus et le dessous de la zone de contact, autrement dit entre la tête et le culot de la colonne. Cette différence ne devrait de préférence pas dépasser environ 100 mbar de sorte que si la température de l'hydrolysat et de la vapeur est par exemple de 60°C au dessus de la zone de contact, elle ne dépasse pas 70°C au dessous de la zone de contact.

Dans un mode d'exécution préféré du présent procédé, on maintient la température de l'hydrolysat avant distillation à une valeur supérieure de 1-5°C à celle de l'hydrolysat au-dessus de la zone de contact. On a constaté qu'il est possible de compenser ainsi une légère dilution de l'hydrolysat provoquée par la condensation d'une petite quantité de vapeur le long de la zone de contact. Cette condensation est en effet difficile à éliminer complètement, une certaine quantité de chaleur se perdant malgré tout au travers d'une isolation à prévoir entre la zone de contact et l'extérieur.

Dans un mode d'exécution particulier du présent procédé, on maintient la densité de l'hydrolysat à une valeur sensiblement constante en réglant la température de l'hydrolysat avant la distillation en fonction de la densité de l'hydrolysat après distillation. Ce mode d'exécution est particulièrement destiné au cas où l'on soumet l'hydrolysat à ladite distillation à la vapeur après la séparation desdits seconds insolubles. En effet, dans ce cas, la densité de l'hydrolysat peut varier en particulier en fonction du temps où on l'a laissé reposer. Si l'on prélève de l'hydrolysat dans différentes cuves pour parvenir à un mélange adéquat avant remplissage de flacons par exemple, ce mode d'exécution permet d'ajuster automatiquement la densité à une valeur désirée précise. Au cas où, de toute manière, il est prévu un réglage de la température de l'hydrolysat avant la distillation, ce réglage peut alors s'effectuer autour d'une valeur de consigne imposée automatiquement en fonction de la densité de l'hydrolysat après distillation. Si la densité mesurée est légèrement trop faible, la température de consigne sera légèrement augmentée de manière que l'hydrolysat subisse une légère concentration par évaporation sous ladite pression réduite. A l'inverse si la densité mesurée est trop grande, la température de consigne sera légèrement abaissée de manière que l'hydrolysat subisse une légère dilution par condensation de la vapeur de distillation se trouvant à ladite pression réduite. Ce principe de régulation s'est révélé particulièrement simple, sûr et efficace dans la pratique où la densité du condiment liquide mis dans le commerce doit satisfaire à des critères extrêmement sévères.

Quant à l'appareil de distillation à la vapeur pour la mise en oeuvre du procédé selon la présente invention, il est donc constitué et caractérisé comme indiqué ci-dessus. En ce qui concerne la colonne de distillation, celle-ci est donc composée d'une tête, d'un corps cylindrique garni d'éléments de contact, et d'un culot. Elle est de préférence complètement enveloppée dans un manteau isolant destiné à limiter au maximum les déperditions de chaleur de l'intérieur vers l'extérieur. Le corps cylindrique délimite ladite zone de contact. Il peut être rempli d'éléments de contact à disposer en vrac tels que des hélices ou des tronçons de tubes par exemple. Il est de préférence rempli d'éléments de contact disposés dans un ordre déterminé.

La tête de la colonne présente donc un diamètre sensiblement plus grand que le diamètre du corps. On a constaté en effet que cet élargissement de la tête de la colonne permet de résoudre en grande partie un problème de moussage de l'hydrolysat introduit dans la colonne. Si la tête de la colonne présente le même diamètre que celui de la colonne, la mousse produite par les gaz qui se détendent et sortent de l'hydrolysat au moment où il est introduit dans la colonne où règne ladite pression réduite risque de monter trop haut dans ladite tête et la vapeur qui sort de la colonne risque d'entraîner avec elle une quantité non négligeable d'hydrolysat.

C'est ainsi que la tête de la colonne est reliée au corps par un col tronconique, un anneau de détente cylindrique présentant au moins un orifice d'écoulement est disposé concentriquement contre la paroi intérieure dudit col, ladite conduite d'introduction de l'hydrolysat débouche dans un espace annulaire délimité par ledit col tronconique et ledit anneau de détente, et un répartiteur d'hydrolysat est disposé au-dessous dudit anneau de détente. Cette forme constitue un perfectionnement qui aide également à résoudre ledit problème de moussage de l'hydrolysat. Ainsi, non seulement la mousse dispose d'un espace plus large pour se désagréger avant de monter trop haut, mais l'hydrolysat introduit dans la colonne dispose également d'un espace plus étendu qui favorise une détente moins violente des gaz qu'il renferme et donc la production d'une moins grande quantité de mousse. L'anneau de détente présente au moins un orifice d'écoulement par lequel l'hydrolysat essentiellement dégazé peut alors s'écouler sur un répartiteur destiné à le répartir régulièrement sur les éléments de contact sur toute la section du corps cylindrique.

Ledit dispositif de pompage de gaz est destiné à créer et à entretenir ladite pression réduite et il est branché de préférence à ladite tête dans sa partie supérieure afin de ne pas aspirer la mousse produite par la détente des gaz renfermés par l'hydrolysat introduit dans la colonne. Ce dispositif de pompage est de préférence composé d'une pompe mécanique, telle qu'une pompe à palette par exemple, pour évacuer l'air et d'un condenseur pour condenser la vapeur chargée de DCP, branchés en série. Dans une forme d'exécution préférée du présent appareil, celui-ci comprend un dispositif de réglage de ladite pression réduite comprenant une jauge de mesure de la pression disposée au sommet de ladite tête, une vanne de réglage de débit d'air auxiliaire branchée sur le dispositif de pompage de gaz après ledit condenseur et avant ladite pompe mécanique, et un circuit électronique de réglage relié électriquement à cette jauge et à cette vanne. Ce dispositif s'est révélé particulièrement avantageux parce qu'il présente un temps de réaction beaucoup plus court qu'un dispositif basé sur le réglage de la température du condenseur par exemple. En outre, on peut prévoir un dispositif d'élimination du DCP du condensat branché sur le condenseur. Un tel dispositif peut simplement consister en un récipient tampon placé entre le condenseur et un collecteur d'eaux usées, destiné à recueillir le condensat s'écoulant du condenseur et à permettre sa surneutralisation. On a constaté en effet que les 30—50 ppm de DCP que peut contenir le condensat peuvent être détruits par surneutralisation, notamment par addition d'hydroxyde de sodium.

Ledit culot de la colonne constitue la partie inférieure de la colonne. Il est destiné à recueillir l'hydrolysat qui a traversé ledit corps cylindrique rempli d'éléments de contact. Ladite conduite d'injection de vapeur est donc branchée sur la colonne entre le culot et le corps et elle peut déboucher sur une buse destinée à la répartir régulièrement sous les éléments de contact sur toute la section du corps cylindrique. Ladite conduite d'évacuation de l'hydrolysat est branchée sur ledit culot, de préférence en son point le plus bas. Dans une forme d'exécution préférée du présent appareil, celui-ci comprend également un dispositif de réglage du niveau de l'hydrolysat dans le culot branché sur ladite conduite d'évacuation. Ce dispositif peut comprendre par exemple une jauge de niveau disposée dans le culot au-dessous de la buse d'injection de vapeur, une vanne de réglage du débit montée en série sur la conduite d'évacuation, et un circuit électronique de réglage relié électriquement à cette jauge et à cette vanne.

Comme indiqué ci-dessus, le présent appareil comprend en outre un dispositif de réglage de la température de l'hydrolysat branché sur ladite conduite d'introduction de l'hydrolysat dans la colonne. Ce dispositif peut lui-même comprendre un échangeur de chaleur branché en série d'une part sur ladite conduite d'introduction et d'autre part sur un circuit auxiliaire de circulation d'un liquide caloriporteur, un circuit de chauffage à la vapeur dudit liquide caloriporteur branché sur ledit circuit fermé, une vanne de commande de débit de vapeur de chauffage, un élément de mesure de la température de l'hydrolysat disposé sur ladite conduite d'introduction en aval dudit échangeur, et un circuit électronique de réglage de la température de l'hydrolysat relié électriquement à cet élément et à cette vanne. Ce dispositif de réglage de la température de l'hydrolysat est relié électriquement, par l'intermédiaire d'un circuit électronique de commande de température, à une cellule de mesure de la densité de l'hydrolysat branchée sur ladite conduite d'évacuation.

Dans une forme d'exécution préférée du présent appareil, celui-ci comprend en outre un dispositif de réglage du débit d'hydrolysat branché sur ladite conduite d'introduction et relié électriquement, par l'intermédiaire d'un circuit électronique de commande de débit, à un dispositif de réglage du débit de vapeur branché sur ladite conduite d'injection. Ces deux dispositifs de réglage du débit peuvent comprendre chacun une cellule de mesure du débit, une vanne de réglage du débit et un circuit électronique de réglage relié électriquement à cette cellule et à cette vanne. Le circuit électronique de commande de débit peut imposer une valeur de consigne du débit de vapeur en fonction du débit d'hydrolysat. Une valeur de consigne d'un rapport à maintenir entre les deux débits peut être entrée à la main dans ce circuit de commande de débit, après avoir été prédéterminée en fonction de la teneur en DCP de l'hydrolysat avant distillation et de la teneur résiduelle tolérée après distillation.

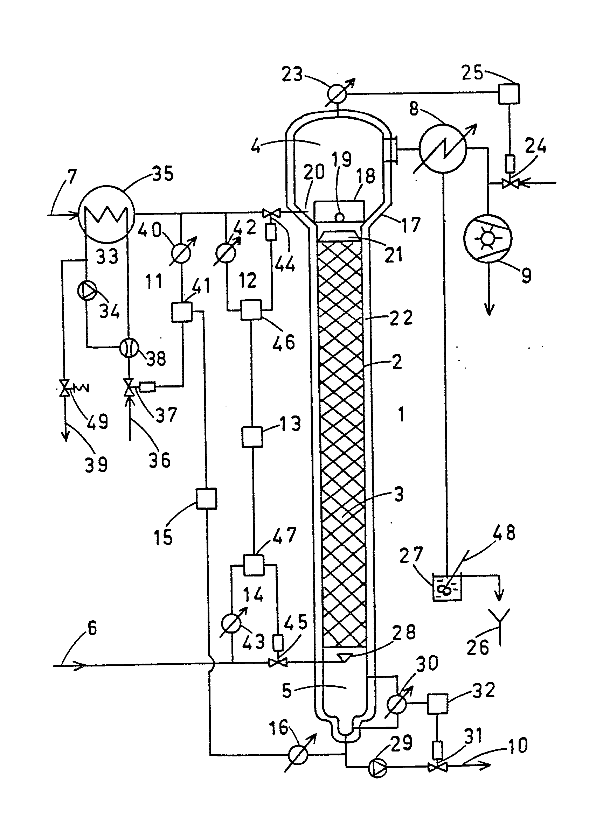

L'appareil de distillation à la vapeur pour la mise en oeuvre du procédé selon la présente invention est décrit ci-après en référence au dessin annexé qui en représente schématiquement une forme d'exécution préférée.

L'appareil représenté comprend une colonne de distillation 1 composée d'un corps cylindrique 2 garni d'éléments de contact 3, d'une tête 4 et d'un culot 5. La colonne 1 est complètement enveloppée dans un manteau isolant 22. La tête 4 présente un diamètre sensiblement plus grand que le diamètre du corps 2 auquel elle est reliée par un col tronconique 17. Un dispositif de pompage de gaz composé d'un condenseur 8 refroidi à l'eau froide et d'une pompe à palette 9 est branché à la tête 4 dans sa partie supérieure. Dans la forme d'exécution représentée, l'appareil comprend un dispositif de réglage de la pression réduite comprenant une jauge 23 de mesure de la pression disposée au sommet de la tête 4, une vanne électro-pneumatique 24 de réglage de débit d'air auxiliaire branchée sur le dispositif de pompage après le condenseur 8 et avant la pompe 9, et un circuit électronique de réglage 25 relié électriquement à cette jauge 23 et à cette vanne 24. Une certaine quantité d'air auxiliaire est constamment pompée par la pompe 9. Si la pression mesurée par la jauge 23 est inférieure à une pression de consigne entrée à la main dans le circuit de réglage 25, ce dernier commandera une ouverture plus grande de la vanne 24 pour augmenter le débit d'air auxiliaire introduit dans le dispositif de pompage, et inversément. En outre, le condenseur 8 est relié à un collecteur d'eau usée 26 par l'intermédiaire d'un dispositif d'élimination du DCP du condensat consistant principalement en un récipient tampon 27 muni d'un agitateur 48, dans lequel le condensat peut être surneutralisé.

Un anneau de détente cylindrique 18 est disposé concentriquement contre le col tronconique 17 avec lequel il délimite un espace annulaire 20. Une conduite 7 d'introduction de l'hydrolysat reliée en amont à au moins une cuve d'hydrolyse ou de repos par l'intermédiaire d'une pompe, non représentées, débouche dans l'espace annulaire 20. Au moins un orifice d'écoulement 19 est prévu au bas de l'anneau de détente 18 pour permettre à l'hydrolysat de s'écouler du fond de l'espace annulaire 20 sur un répartiteur 21 disposé audessous de l'anneau de détente 18 et au-dessus des éléments de contact 3 garnissant le corps cylindrique 2.

Le culot 5 de la colonne est destiné à recueillir l'hydrolysat qui a traversé le corps cylindrique 2. Une conduite d'injection 6 de vapeur reliée en amont à un dispositif de production de vapeur saturée sous pression non représenté est branchée sur la colonne entre le culot 5 et le corps 2. La conduite 6 débouche par l'intermédiaire d'une buse 28 au-dessous des éléments de contact 3. Une conduite d'évacuation 10 de l'hydrolysat est branchée au culot 5 en son point le plus bas. Une pompe d'évacuation 29 est branchée en série sur la conduite 10. Dans la forme d'exécution représentée, l'appareil comprend un dispositif de réglage du niveau de l'hydrolysat dans le culot. Ce dispositif comprend une jauge 30 de niveau disposée dans le culot 5 au-dessous de la buse 28, une vanne électro-pneumatique 31 de réglage du débit d'hydrolysat évacué branchée en série sur la conduite 10, et un circuit électronique de réglage 32 relié électriquement à cette jauge 30 et à cette vanne 31.

L'appareil comprend en outre un dispositif de réglage 11 de la température comprenant luimême un échangeur de chaleur 35 branché en série d'une part sur la conduite 7 d'introduction d'hydrolysat et d'autre part sur un circuit auxiliaire 33, dans lequel un liquide caloriporteur circule sous l'effet d'une pompe 34; un circuit de chauffage du liquide caloriporteur comportant une conduite d'amenée de vapeur 36, une vanne électro-pneumatique 37 de réglage de débit de vapeur, une buse 38 d'injection de vapeur dans le circuit auxiliaire 33 et une conduite d'évacuation 39 de condensat munie d'une vanne de supression 49; un élément 40 de mesure de la température de l'hydrolysat disposé sur la conduite 7 en aval de l'échangeur 35; et un circuit électronique de réglage 41 relié électriquement à cet élément 40 et à cette vanne 37. Dans la forme d'exécution représentée, l'appareil comprend également un circuit électronique de commande 15 de température relié électriquement d'une part à une cellule de mesure 16 de la densité de l'hydrolysat branchée sur la conduite d'évacuation 10 et d'autre part au circuit électronique de réglage 41 dans lequel il impose automatiquement une valeur de consigne de la température en fonction de la densité de l'hydrolysat évacué.

Dans la forme d'exécution représentée, l'appareil comprend également un dispositif de réglage 12 du débit d'hydrolysat introduit dans la colonne et un dispositif de réglage 14 du débit de vapeur injectée dans la colonne. Chacun de ces dispositifs comprend une cellule de mesure 42, 43 du débit, une vanne électro-pneumatique 44, 45 de réglage du débit et un circuit électronique de réglage 46, 47 relié électriquement à cette cellule 42, 43 et à cette vanne 44, 45. Le circuit électronique 46 est destiné à régler le débit de l'hydrolysat autour d'une valeur de consigne entrée à la main et il est relié électriquement au circuit électronique de réglage 47 par l'intermédiaire d'un circuit électronique de commande 13 de débit. Le circuit de commande 13 est destiné à imposer automatiquement dans le circuit de réglage 47 une valeur de consigne du débit de vapeur en fonction du débit d'hydrolysat. Une valeur de consigne d'un rapport à maintenir entre les deux débits peut être entrée à la main dans le circuit de commande 13.

Les exemples ci-après sont présentés à titre d'illustration du procédé selon la présente invention. Les pourcentages et parties y sont donnés en poids sauf indication contraire. Comme indiqué plus haut, ces exemples sont précédés d'une description de la méthode mise au point dans le cadre de la présente invention pour déterminer la teneur en DCP des présents hydrolysats, condensats et condiments.

Méthode de détermination de la teneur en DCP

Principe: La présente méthode consiste en une adsorption du produit à analyser sur une colonne, une élution du DCP avec un mélange d'éther et de pentane et une analyse quantitative par chromatographie en phase gazeuse sur colonne capillaire et détection par capture d'électrons.

Réactifs:
1. Eluant: mélange de 85 parties en volume de pentane avec 15 parties en volume d'éther diéthylique.
2. Solution à 4 µg/ml de trichlorobenzène dans l'éluant.
3. Solutions mixtes standards à concentrations identiques de 0,1 µg/ml de trichorobenzène mais à concentrations échelonnées de 0,125; 0,25; 0,5 et 1 µg/ml de DCP dans l'éluant.
4. Solution à 20% de NaCl dans l'eau distillée.

Appareillage
Chromatographe en phase gazeuse sur colonne capillaire avec injecteur à fente et détecteur par capture d'électrons (ionisation d'un gaz "réactif" composé de 95 parties d'argon et 5 parties de méthane à l'aide de rayons $\beta$ émis par $^{63}$Ni).

Intégrateur et/ou enregistreur.

Echantillons

Les échantillons dont la teneur en DCP est supposée supérieure à 2 ppm sont dilués avec la solution à 20% de NaCl (réactif 4).

De même, on ajoute 20% de NaCl aux condensats.

Elution

On introduit 20 g d'échantillons dans la partie supérieure d'une petite colonne ou cartouche cylindrique verticale garnie d'un remplissage granulé.

On laisse pénétrer l'échantillon dans le remplissage durant 15 min.

On verse ensuite 3 fois 20 ml d'éluant (réactif I) dans la colonne et l'on recueille environ 40 ml d'éluat en environ 20 min par l'extrémité inférieure de la colonne.

On ajoute 1 ml de solution de trichlorobenzène (réactif 2) dans ces 40 ml d'éluat.

Chromatographie

On utilise une colonne capillaire en silice fondue de 50 m de longueur et 0,2 mm de diamètre enduite d'une couche de 0,2 μm d'épaisseur de polyéthylène-glycol présentant un degré de polymérisation de 20000.

On porte la température de la colonne à 200°C 24 h à l'avance.

On soumet l'échantillon à un programme de chauffage consistant à le maintenir 10 min à 115°C, puis à élever sa température à 200°C à la vitesse de 30°C/min et à le maintenir ensuite 12 min à 200°C.

On porte la température de l'injecteur à 250°C et on règle l'ouverture de sa fente à 1:10.

On ajuste le volume d'échantillon injecté à 1,5 μl (dont 1/10 seulement pénètrent dans la colonne).

On utilise comme gaz porteur de l'hydrogène sous une pression de 1,4 bar.

On porte la température du détecteur à 300°C 24 h à l'avance.

On utilise comme gaz de réaction le mélange argon: méthane dans le rapport 95:5 à raison de 30 ml/min, après l'avoir fait passer sur un filtre moléculaire pour le sécher.

Les temps de rétention sont d'environ 5,9 min pour le trichlorobenzène et d'environ 8,5 min pour le DCP.

Résultats

On compare la hauteur et/ou la surface des pics obtenus pour l'échantillon et pour les solutions mixtes standard (réactif 3).

Pour la solution mixte standard qui se rapproche le plus de l'échantillon, on fait le rapport des hauteurs et/ou surfaces des pics correspondant au DCP et au trichloroéthylène.

On fait le rapport correspondant pour les pics de l'échantillon.

Le quotient des deux rapports permet d'établir la teneur en DCP de l'échantillon.

Limites de la méthode

La limite de concentration détectable par la présente méthode est située à environ 0,05—0,1 ppm (0,05—0,1 mg de DCP par kg d'échantillon).

Le taux d'extraction du DCP atteint avec la présente méthode est supérieur à 90%.

Exemple 1

On hydrolyse un tourteau d'arachide avec de l'acide chlorhydrique 6N à 107°C durant 13 heures. On en sépare des substances humiques dites premiers insolubles par filtration. On obtient un hydrolysat présentant une teneur en DCP de 6—7 ppm.

On soumet l'hydrolysat à une distillation à la vapeur à l'aide d'un appareil tel qu'illustré au dessin, entièrement automatisé et commandé par un ordinateur, dans lequel la tête de la colonne présente un diamètre de 2 m et une hauteur de 3 m, le corps de la colonne présente un diamètre de 1 m et est garni d'éléments de contact sur une hauteur de 6 m, et la colonne présente une hauteur totale de 11,5 m. Les éléments de contact sont des feuilles métalliques ondulées percées de trous et appliquées les unes contre les autres en croisant l'orientation des plis, présentant une surface de contact de 250 m²/m³.

Durant une semaine sans interruption, on introduit dans la colonne 8000 kg/h d'hydrolysat ayant une densité de 1,260 g/cm³ et une température de 62°C. On maintient dans la tête de la colonne une pression de 200 mbar. On injecte à contrecourant dans la colonne 1440 kg/h de vapeur d'eau saturée à par exemple 2 bar. La température dans le culot est de 63°C. On évacue de la colonne 8000 kg/h d'hydrolysat présentant une densité de 1,260 g/cm³ et une teneur en DCP inférieure à 0,1 ppm. Par ailleurs, on élimine le DCP du condensat provenant du condenseur en élevant son pH à au moins 11 par addition de NaOH.

On laisse reposer l'hydrolysat deux semaines et on en sépare par filtration des substances qui ont cristallisé lentement et des particules colloïdales qui se sont agglomérées lentement dites seconds insolubles. On obtient un condiment liquide de couleur sombre dont la teneur en DCP est inférieure à 0,1 ppm mais dont la densité, la composition en acides aminés ni les qualités organoleptiques ne diffèrent en rien de celles d'un condiment obtenu de manière semblable mais sans soumettre l'hydrolysat à la distillation à la vapeur après la séparation des premiers ou des seconds insolubles.

Exemple 2

On hydrolyse du gluten de blé avec de l'acide chlorhydrique 6 N à 100°C durant 12 h. On en sépare des substances humiques dites premiers insolubles par filtration. On obtient un hydrolysat présentant une teneur en DCP de environ 5 ppm.

On soumet l'hydrolysat à une distillation à la vapeur à l'aide d'un appareil tel qu'illustré au dessin, entièrement automatisé et commandé par un ordinateur, dans lequel la tête de la colonne présente un diamètre de 0,9 m et une hauteur de 2 m, le corps de la colonne présente un diamètre de 0,4 m et est garni des mêmes éléments de contact qu'à l'exemple 1 sur une hauteur de 6 m, et la colonne elle-même présente une hauteur totale de 11 m.

Durant une semaine sans interruption, on introduit dans la colonne 2000 kg/h d'hydrolysat ayant une densité de 1,262 g/cm³ et une température de 64°C. On maintient dans la tête de la colonne une pression de 200 mbar. On injecte à contre-courant dans la colonne 300 kg/h de vapeur d'eau saturée à par exemple 2 bar. La température dans le culot est de 63°C. On évacue de la colonne 2000 kg/h d'hydrolysat présentant une densité de 1,262 g/cm³ et une teneur en DCP inférieure à 0,1 ppm. Par ailleurs, on élimine le DCP du condensat provenant du condenseur en élevant son pH à au moins 11 par addition de NaOH.

On laisse reposer l'hydrolysat quelques jours et on en sépare cesdits seconds insolubles par filtration. On obtient un condiment liquide de couleur sombre dont la teneur en DCP est inférieure à 0,1 ppm mais dont la densité, la composition en acides aminés ni les qualités organoleptiques ne diffèrent en rien de celles d'un condiment obtenu de manière semblable mais sans soumettre l'hydrolysat à la distillation à la vapeur après la séparation des premiers ou des seconds insolubles.

**Revendications**

1. Procédé de fabrication d'un condiment, dans lequel on hydrolyse des protéines végétales à l'acide chlorhydrique concentré, on neutralise l'hydrolysat, on en sépare des premiers insolubles, on le laisse reposer et on en sépare des seconds insolubles, caractérisé par le fait que, après la séparation desdits premiers ou desdits seconds insolubles, on soumet l'hydrolysat à une distillation à la vapeur sous pression réduite tout en maintenant la densité de l'hydrolysat à une valeur sensiblement constante, de façon à en éliminer le dichloro-1-3-propane-2-ol.

2. Procédé selon la revendication 1, caractérisé par le fait que l'on soumet l'hydrolysat à ladite distillation à la vapeur à une température de 45 à 70°C sous une pression de 100—320 mbar, en mettant en contact un courant ascendant de 10—20 parties en poids/h de vapeur avec un courant descendant de 100 parties en poids/h d'hydrolysat le long d'une zone de contact de 5—15 m de hauteur garnie d'éléments de contact.

3. Procédé selon la revendication 2, caractérisé par le fait que l'on maintient la température de l'hydrolysat avant distillation à une valeur supérieure de 1—5°C à celle de l'hydrolysat au-dessus de la zone de contact.

4. Procédé selon la revendication 1, caractérisé par le fait que l'on maintient la densité de l'hydrolysat à une valeur sensiblement constante en réglant la température de l'hydrolysat avant la distillation en fonction de la densité de l'hydrolysat après distillation.

5. Procédé selon la revendication 1, caractérisé par le fait que l'on maintient la densité de l'hydrolysat à une valeur sensiblement constante comprise entre 1,250 et 1,265 g/cm³.

6. Appareil de distillation à la vapeur pour la mise en oeuvre du procédé selon la revendication 1, comprenant une colonne de distillation (1) composée d'une tête (4), d'un corps cylindrique (2) garni d'éléments de contact (3), et d'un culot (5), un dispositif de pompage de gaz (8, 9) branché sur ladite tête, une conduite d'introduction (7) d'hydrolysat branchée sur ladite colonne entre ledit corps et ladite tête, une conduite d'injection (6) de vapeur branchée sur ladite colonne entre ledit culot et ledit corps, et une conduite d'évacuation (10) de l'hydrolysat branchée sur ledit culot, caractérisé par le fait que

(i) ladite tête (4) présente un diamètre sensiblement plus grand que le diamètre dudit corps (2), et qu'elle est reliée au dit corps (2) par un col tronconique (17), un anne au de détente cylindrique (18) présentant au moins un orifice d'écoulement (19) étant disposé concentriquement contre la paroi intérieure dudit col, ladite conduite (7) d'introduction de l'hydrolysat débouchant dans un espace annulaire (20) délimité par ledit col tronconique (17) et ledit anneau de détente (18), et un répartiteur (21) d'hydrolysat étant disposé au-dessous dudit anneau de détente,

(ii) il comprend en outre un dispositif de réglage (11) de la température de l'hydrolysat branché sur la conduite d'introduction (7), et relié électriquement par l'intermédiaire d'un circuit électronique de commande (15) de température, à une cellule de mesure (16) de la densité de l'hydrolysat branchée sur la conduite (10) d'évacuation.

7. Appareil selon la revendication 6, caractérisé par le fait qu'il comprend en outre un dispositif de réglage (12) du débit d'hydrolysat branché sur ladite conduite d'introduction (7) et relié électriquement par l'intermédiaire d'un circuit électronique de commande (13) de débit, à un dispositif de réglage (14) du débit de vapeur branché sur ladite conduite d'injection (6).

**Patentansprüche**

1. Verfahren zu Herstellung eines Gewürzes, in welchem man pflanzliche Protein mit konzentrierter Chlorwasserstoffsäure hydrolysiert, das Hydrolysat neutralisiert, davon die ersten unlöslichen Rükstände abtrennt, das Hydrolysat ruhen läßt und davon die zweiten unlöslichen Rückstände abtrennt, dadurch gekennzeichnet, daß man das Hydrolysat nach der Abtrennung der genannten ersten unlöslichen Rückstände oder der gennanten zweiten unlöslichen Rückstände einer Wasserdampfdestillation unter vermindertem Druck unterwirft, wobei die Dichte des Hydrolysats auf einem im wesentlichen konstanten Wert gehalten wird, derart, daß dadurch das 1,3-Dichloropropan-2-ol aus dem Hydrolysat entfernt wird.

2. Verfahren nach Anspruch 1, dadurch gekennzeichnet, daß man das Hydrolysat bei einer Temperatur von 45 bis 70°C und unter einem Druck von 100 bis 320 mbar der Wasserdampfdestillation unterwirft, wobei man einen aufsteigenden Strom von 10 bis 20 Gew.-Teilen/h Wasserdampf mit einem absteigenden Strom von 100 Gew.-Teilen/h Hydrolysat entlang einer 5 bis 15 hohen Kontaktzone in Berührung bringt, welche mit Kontaktelementen ausgestattet ist.

3. Verfahren nach Anspruch 2, dadurch gekennzeichnet, daß man die Temperatur des Hydrolysates vor der Destillation auf einem um 1 bis 5°C höhren Wert als jenem der Temperatur des Hydrolysates oberhalb der Kontaktzone hält.

4. Verfahren nach Anspruch 1, dadurch gekennzeichnet, daß man die Dichte des Hydrolysates dadurch auf einem im wesentlichen konstanten Wert hält, daß man die Temperatur des Hydrolysates vor des Destillation als eine Funktion der Dichte des Hydrolysates nach der Destillation regelt.

5. Verfahren nach Anspruch 1, dadurch gekennzeichnet, daß man die Dichte des Hydrolysates auf einem im wesentlichen konstanten, zwischen 1,250 und 1,265 g/cm³ liegenden Wert hält.

6. Wasserdampfdestillationsvorrichtung zur Durchführung des Verfahrens nach Anspruch 1, welche eine Destillationskolonne (1), die ihrerseits aus einem Kopf (4), einem zylindrischen, mit Kontaktelementen (3) ausgestattenten Körper (2) und einem Sumpf (5) zusammengesetzt ist, eine mit dem Kopf verbundene Einrichtung (8, 9) zum Pumpen von Gas, eine Zufuhrleitung (7) für das Hydrolysat, welche Zufuhrleitung mit der Kolonne zwischen dem Körper und dem Kopf derselben verbunden ist, eine Dampfzufuhrleitung (6), welche mit der Kolonne zwischen dem Sumpf und dem Körper derselben verbunden ist, und eine Ablaufleitung (10) für das Hydrolysat umfaßt, welche Ablaufleitung mit dem Sumpf der Kolonne verbunden ist, dadurch gekennzeichnet, daß

(i) der Kopf (4) einen wesentlich größeren Durchmesser als der Körper (2) aufweist, und daß der Kopf (4) mit dem Körper (2) über einen kegelstumpfförmigen Hals (17) verbunden ist, wobei ein zylindrischer Entspannungsring (18), der wenigstens eine Abflußöffnung (19) aufweist, konzentrisch zur Innenwand des Halses angeordnet ist, und wobei die Zufuhrleitung (7) für das Hydrolysat in einen ringförmigen Raum (20) einmündet, der von dem kegelstumpfförmigen Hals (17) und dem Entspannungsring (18) begrenzt wird, und wobei ein Verteiler (21) für das Hydrolysat unterhalb des Entspannungsringes angeordnet ist;

(ii) die Vorrichtung außerdem eine Regeleinrichtung (11) für die Temperatur des Hydrolysates umfaßt, die mit der Zufuhrleitung (7) in Verbindung steht und über einen elektronischen Steuerkreis (15) für die Temperatur mit einer Meßzelle (16) zum Messen der Dichte des Hydrolysates elektrisch verbunden ist, welche Meßzelle mit der Ablaufleitung (10) verbunden ist.

7. Vorrichtung nach Anspruch 6, dadurch gekennzeichnet, daß sie außerdem eine Regeleinrichtung (12) für den Durchsatz an Hydrolysat umfaßt, die mit der Zufuhrleitung (7) verbunden ist und über einen elektronischen Steuerkreis (13) für die Durchsatzmenge mit einer Regeleinrichtung (14) für die Durchsatzmenge an Dampf elektrisch verbunden ist, welche Regeleinrichtung (14) mit der Dampfzufuhrleitung (6) verbunden ist.

**Claims**

1. A process for the manufacture of a condiment in which vegetable proteins are hydrolyzed with concentrated hydrochloric acid, the hydrolyzate is neutralized, first insolubles are separated therefrom and, after standing, second insolubles are separated therefrom, characterized in that, after a separation of said first or second insolubles, the hydrolyzate is subjected to steam distillation under reduced pressure while keeping the density of the hydrolyzate at a substantially constant value in order to eliminate 1,3-dichloropropan-2-ol present.

2. A process as claimed in Claim 1, characterized in that the hydrolyzate is subjected to steam distillation at a temperature of from 45 to 70°C under a pressure of 100-320 mbar by contacting an ascending stream of 10—20 parts by weight/h of steam with a descending stream of 100 parts by weight/h of hydrolyzate over a contact zone 5—15 m in height filled with contact elements.

3. A process as claimed in Claim 2, characterized in that the temperature of the hydrolyzate before distillation is kept at a value higher by 1 to 5°C than that of the hydrolyzate above the contact zone.

4. A process as claimed in Claim 1, characterized in that the density of the hydrolyzate is kept at a substantially constant value by regulating the temperature of the hydrolyzate before distillation according to the density of the hydrolyzate after distillation.

5. A process as claimed in Claim 1, characterized in that the density of the hydrolyzate is maintained at a substantially constant value of from 1.250 to 1.265 g/cm³.

6. A steam distillation apparatus for carrying out the process claimed in Claim 1, comprising a distillation column (1) consisting of a head (4), a cylindrical body (2) filled with contact elements (3) and a sump (5), a gas pumping unit (8, 9) connected to said head, a pipe (7) for the introduction of hydrolyzate connected to said column between said body and said head, a steam injection pipe (6) connected to said column between said sump and said body, and a pipe (10) for the removal of hydrolyzate connected to said sump characterized in that

(i) the diameter of said head (4) is noticeably larger than the diameter of said body (2), and that said head (4) is connected to said body (2) by a frustoconical neck (17), a cylindrical expansion collar (18) having at least one flow opening (19) is arranged concentrically against the inner wall of said neck, said pipe (7) for the introduction of hydrolyzate opens into an annular space (20) defined by said frustoconical neck (17) and said expansion collar (18), and a distributor (21) for hydrolyzate is arranged below said expansion collar,

(ii) it additionally comprises an arrangement (11) for regulating the temperature of the hydrolyzate connected to said introduction pipe (7), and electrically connected by an electronic temperature control circuit (15) to a cell (16) for measuring the density of the hydrolyzate connected to said removal pipe (10).

7. An apparatus as claimed in claim 6, characterized in that it additionally comprises an arrangement (12) for regulating the flow of hydrolyzate connected to said introduction pipe (7) and electrically connected by an electronic flow control circuit (13) to an arrangement (14) for regulating the flow of steam connected to said injection pipe (6).